# EUROPÄISCHE PATENTANMELDUNG

(11) **EP 2 196 292 A2**
(43) Veröffentlichungstag der Anmeldung: **16.06.2010**
(21) Anmeldenummer: 09015133.3
(22) Anmeldetag: 07.12.2009
(51) Int. Cl.: B25J 9/16

(54) **Industrieroboter und Verfahren zum Betreiben eines Industrieroboters**

(30) Priorität: 10.12.2008 DE 102008054501
(71) Anmelder: KUKA Roboter GmbH, 86165 Augsburg (DE)
(72) Erfinder: Keyl, Harmut, 86161 Augsburg (DE); Nitz, Gernot, 86163 Augsburg (DE)
(74) Vertreter: Patentanwälte Funk & Böss GbR

(57) **Zusammenfassung**

Die Erfindung betrifft einen Industrieroboter (1) und ein Verfahren zum Betreiben eines Industrieroboters (1). Der Industrieroboter (1) umfasst einen Roboterarm mit mehreren Achsen (A1-A6), wenigstens einen elektrischen Antrieb (13), der einen Drehstrom-Synchronmotor (8-11) aufweist und eingerichtet ist, eine der Achsen (A1- A6) zu bewegen, und eine Positionserfassungsvorrichtung (29), die eingerichtet ist, die Position der dem Synchronmotor (11) zugeordneten Achse (A2) zu ermitteln. Der Industrieroboter (1) ist eingerichtet, mittels erster Signale, die elektrischen Strömen (i) und/oder elektrischen Spannungen (V) des Synchronmotors (11) zugeordnet sind, die Position der dem Synchronmotor (11) zugeordneten Achse (A2) zu ermitteln.

## Beschreibung

Die Erfindung betrifft einen Industrieroboter und ein Verfahren zum Betreiben eines Industrieroboters.

Industrieroboter sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Industrieroboter weisen im Wesentlichen einen Roboterarm mit mehreren Achsen und Hebeln auf, die von Antrieben bewegt werden. Die Antriebe sind z.B. elektrische Antriebe, die insbesondere Synchronmotoren aufweisen können.

Für den Betrieb des Industrieroboters ist es nötig, die Positionen der Bewegungsachsen, beispielsweise ihre Winkelstellungen insbesondere in sicherer Technik zu erfassen.

Für eine sichere Positionserfassung insbesondere von positionsgeregelten elektrischen Antrieben kann beispielsweise die Position, insbesondere die Winkelstellung des Rotors des elektrischen Motors des Antriebs mittels eines Resolvers ermittelt werden. Aufgrund seiner über Jahrzehnte im Betrieb nachgewiesenen relativ niedrigen Ausfallrate gilt die Positionserfassung mittels eines Resolvers als sicher, obwohl im Grunde keine zwei unabhängigen Wege für die Positionserfassung vorhanden sind.

Resolver sind kostengünstig und daher relativ weit verbreitet. Resolver weisen jedoch eine relativ begrenzte Auflösung auf und haben relativ große Winkelfehler typischerweise im Bereich einiger Winkelminuten.

Eine weitere Möglichkeit, die Position des Rotors und somit der Position der relevanten Bewegungsachse zu ermitteln, sind so genannte Sin/Cos-Geber oder Inkrementalgeber (allgemein: Drehgeber) z.B. mit optischer oder magnetischer Erfassung. Mit Drehgebern sind derzeitig Auflösungen von größer 20 Bit pro Umdrehung bei Genauigkeiten besser als 10" technisch möglich. Dadurch können relativ hochdynamische und hochgenaue positionsgeregelte Antriebe realisiert werden.

Im Gegensatz zu Resolvern sind Drehgeber nicht als sicher eingestuft, weshalb bei Verwendung von Drehgebern ein zweites, redundantes Positionserfassungssystem benötigt wird. Dies kann z.B. ein zweiter Drehgeber oder auch ein Resolver sein. Drehgeber sind jedoch insbesondere im Vergleich zu Resolvern relativ teuer.

Die Aufgabe der vorliegenden Erfindung ist es, Vorraussetzungen für eine kostengünstige, sichere und gegebenenfalls auch genaue Positionserfassung einer Bewegungsachse eines Industrieroboters anzugeben.

Die Aufgabe der Erfindung wird gelöst durch einen Industrieroboter, aufweisend einen Roboterarm mit mehreren Achsen, wenigstens einen elektrischen Antrieb, der einen Drehstrom-Synchronmotor aufweist und eingerichtet ist, eine der Achsen zu bewegen, und eine Positionserfassungsvorrichtung, die eingerichtet ist, die Position der dem Synchronmotor zugeordneten Achse zu ermitteln, wobei der Industrieroboter eingerichtet ist, mittels erster Signale, die elektrischen Strömen und/oder elektrischen Spannungen des Synchronmotors zugeordnet sind, die Position der dem Synchronmotor zugeordneten Achse zu ermitteln.

Die Aufgabe der Erfindung wird auch gelöst durch ein Verfahren zum Betreiben eines Industrieroboters, aufweisend folgende Verfahrensschritte:
- Ermitteln der Position einer Achse eines mehrere Achsen aufweisenden Industrieroboters mittels einer Positionserfassungsvorrichtung und
- Ermitteln der Position der Achse mittels erster Signale, die elektrischen Strömen und/oder elektrischen Spannungen eines die Achse bewegenden Drehstrom-Synchronmotors zugeordnet sind.

Der erfindungsgemäße Industrieroboter umfasst demnach den Roboterarm mit mehreren Achsen, die, wie es allgemein bekannt ist, beispielsweise mittels Antrieben, insbesondere mittels elektrischen Antrieben bewegt werden können. Eine der Achsen wird erfindungsgemäß mittels eines den Drehstrom-Synchronmotor umfassenden elektrischen Antriebs bewegt. Der Synchronmotor ist vorzugsweise ein permanent erregter Synchronmotor, was aber nicht notwendigerweise der Fall sein muss.

Um die Position der dem Synchronmotor zugeordneten Achse zu ermitteln, umfasst der erfindungsgemäße Industrieroboter die Positionserfassungsvorrichtung, bei der es sich vorzugsweise um einen Drehgeber, beispielsweise um einen Sin/Cos Geber oder einen Inkrementalgeber handelt. Prinzipiell sind aber auch andere Positionserfassungsvorrichtungen möglich, wie z.B. Resolver.

Zusätzlich ist der erfindungsgemäße Industrieroboter eingerichtet, mittels der ersten Signale die Position der dem Synchronmotor zugeordneten Achse zu ermitteln. Die ersten Signale sind den elektrischen Strömen und/oder elektrischen Spannungen des Synchronmotors zugeordnet. Die ersten Signale stehen gegebenenfalls für eine Regelung, insbesondere für eine Stromregelung, des Synchronmotors bzw. des den Synchronmotor umfassenden elektrischen Antriebs zu Verfügung, wodurch eine Verwendung der ersten Signale zur Positionsbestimmung relativ kostengünstig realisierbar ist.

Die ersten Signale können auch zusätzlich generierten, nicht zum Bewegen des Drehstrom-Synchronmotors dienenden elektrischen Strömen und/oder elektrischen Spannungen zugeordnet sein. Es können nämlich relativ kurzzeitige externe Impulse auf die Motorwicklungen pulsiert werden, die bekannte Eingangseigenschaften aufweisen und in Abhängigkeit der Rotorstellung an gegebenenfalls drei Spulen des Drehstrom-Synchronmotors unterschiedliche Ausgangsimpulse induzieren, die detektiert und derart ausgewertet werden können, dass die Rotorwinkellage daraus hergeleitet werden kann.

Bei der Position der relevanten Achse handelt es sich insbesondere um die Winkelstellung der Achse bezogen auf einen Referenzwinkel und/oder um die Position, insbesondere der Winkelstellung des Rotors des Synchronmotors.

Die ersten Signale sind nach einer Ausführungsform des erfindungsgemäßen Industrieroboters bzw. des erfindungsgemäßen Verfahrens den dreiphasigen elektrischen Spannungen und/oder den dreiphasigen elektrischen Strömen zugeordnet. In der Praxis ist es nicht nötig, alle drei Spannungen bzw. Ströme des Synchronmotors zu ermitteln. Es ist lediglich nötig, zwei der Dreiphasen-Spannungen bzw. der Dreiphasen-Ströme zu messen. Die dritte Größe kann dann aus den beiden anderen Werten aufgrund bekannter Beziehungen der Drehstromtechnik ermittelt werden. Mittels der ermittelten elektrischen Ströme bzw. Spannungen können Rückschlüsse auf die Winkelstellung des Rotors des Synchronmotors und somit auf die Position der entsprechenden Achse gezogen werden.

Der den Synchronmotor umfassende elektrische Antrieb kann einen dem Synchronmotor vorgeschalteten Umrichter mit einem Zwischenkreis aufweisen, dessen Zwischenkreisspannung den ersten Signalen zugeordnet ist. Umrichter als solche sind dem Fachmann bekannt. Diese erzeugen z.B. mittels Puls-Weiten-Modulation eine einstellbare Dreiphasen-Spannung für den Synchronmotor und umfassen den Zwischenkreis, der z.B. einen entsprechend dimensionierten Kondensator umfasst.

Die mittels der ersten Signale ermittelte Position der relevanten Achse kann in mechanischen oder insbesondere in elektrischen Winklegraden des Rotors des Synchronmotors ausgedrückt sein.

Der erfindungsgemäße Industrieroboter kann eine Steuerungsvorrichtung aufweisen, die eingerichtet ist, den Antrieb für das Bewegen ihrer Achse anzusteuern. Diese Steuerungsvorrichtung kann auch eingerichtet sein, die mittels der ersten Signale und die mittels der Positionserfassungsvorrichtung ermittelten Positionen auszuwerten und das Bewegen der relevanten Achse oder aller Achsen des erfindungsgemäßen Industrieroboters in dem Fall zu stoppen, wenn sich die beiden ermittelten Positionen um einen vorbestimmten Wert unterscheiden. Somit ist es möglich, die beiden Positionsermittlungen gegenseitig zu überwachen.

Nach einer bevorzugten Ausführungsform des erfindungsgemäßen Industrieroboters ist dieser eingerichtet, für das Bewegen der dem Synchronmotor zugeordneten Achse den Antrieb aufgrund von von der Positionserfassungsvorrichtung stammenden zweiten Signalen zu regeln. Die Achsen bzw. deren Antriebe werden in der Praxis geregelt. So sind die Antriebe z.B.

Drehzahl geregelt oder positionsgeregelt. Die für eine solche Regelung gegebenenfalls notwendige Information über die Winkelstellungen der relevanten Achsen wird nach dieser Variante mittels der Positionserfassungsvorrichtung ermittelt. Insbesondere wenn als Positionserfassungsvorrichtung Drehgeber, wie beispielsweise Sin/Cos Geber oder Inkrementalgeber verwendet werden, kann eine relativ genaue Positionsbestimmung, insbesondere Winkelbestimmung des Rotors erfolgen, die einen positiven Einfluss auf die Regelung des den Synchronmotor umfassenden Antriebs haben. Dadurch sind Vorraussetzungen für eine relativ hochwertige Regelung dieses Antriebs und somit der relevanten Achse gegeben.

Die Positionsermittlung mittels der ersten Signale wird dann zur zusätzlichen Überwachung dieser Achse verwendet, wodurch eine Vorraussetzung für eine sichere Positionsüberwachung gegeben ist.

Je nach Ausführungsform des erfindungsgemäßen Industrieroboters ergeben sich somit Vorraussetzungen für einen kostengünstigen, hochgenauen und hochdynamischen positionsgeregelten elektrischen Antrieb für die relevante Achse des Industrieroboters aufgrund der Verwendung einer relativ genauen und relativ dynamischen Positionserfassung insbesondere mittels Drehgeber oder eines anderen Positionserfassungssystems.

Für die sichere Positionsüberwachung wird erfindungsgemäß die redundante Positionserfassung mittels einer "geberlosen" Positionsfassung basierend auf den ersten Signalen realisiert. "Geberlos" bedeutet in diesem Zusammenhang, dass außer gegebenenfalls den bereits im eventuell vorhandnen Umrichter vorhandenen Sensoren, z.B. für eine Stromregelung des Antriebs keine weiteren Sensoren nötig sind. "Geberlose" Positionserfassungen sind z.B. in der EP 1 051 801 B1, DE 102 26 974 A1, DE 10 2006 004 034 A1, EP 0 539 401 B1, DE 10 2007 003 874 A1 oder EP 0 579 694 B1 offenbart.

Ein Vorteil des erfindungsgemäßen Industrieroboters bzw. des erfindungsgemäßen Verfahrens kann sein, dass ein vollständig redundanter zweiter Weg für die Positionserfassung ohne zusätzliche bzw. wenn, dann nur geringen Kosten geschaffen wird, da die "sensorlose" bzw. "geberlose" Positionserfassung mittels der ersten Signale unter Nutzung gegebenenfalls bereits vorhandener Strom- und Spannungsmessvorrichtungen vollständig im gegebenenfalls vorhandenen Umrichter über Software realisierbar ist.

Für die redundante Erfassung der Position eines geregelten, einen Synchronmotor, insbesondere einen permanent erregten Synchronmotor aufweisenden elektrischen Antriebs für die relevante Achse des Industrieroboters wird das "sensorlose" bzw. "geberlose" System verwendet. Hierbei wird erfindungsgemäß gegebenenfalls ausgenutzt, dass die Regelung eines solchen elektrischen Antriebs i.A. über eine so genannte feldorientierte Regelung (Englisch: "vector control") realisiert wird, die für den Betrieb die drei Phasenströme (mindestens jedoch zwei der drei Phasenströme, der dritte Phasenstrom kann berechnet werden) sowie gegebenenfalls die Zwischenkreisspannung des Umrichters benötigt. Diese bereits vorhandenen Sensoren reichen aus, um über z.B. den oben genannten Druckschriften bekannte Algorithmen auf die Rotorposition des Synchronmotors zu schließen. Damit stehen für die Positionserfassung erfindungsgemäß zwei unabhängige Wege zur Verfügung:
1. Weg: Konventionelle Positionserfassung über z.B. Drehgeber (allgemein: Positionserfassungsvorrichtung). Hiermit läuft je nach Ausführungsform des erfindungsgemäßen Industrieroboters bzw. des erfindungsgemäßen Verfahrens wegen der gegebenenfalls höheren Auflösung, der gegebenenfalls höheren Genauigkeit und der gegebenenfalls besseren dynamischen Eigenschaften gegebenenfalls die Positionsregelung und Stromregelung des den Synchronmotor aufweisenden elektrischen Antriebs.
2. Weg: "sensorlose" bzw. "geberlose" Erfassung mittels der ersten Signale: Hiermit wird gegebenenfalls die mittels der Positionserfassungsvorrichtung ermittelten Position der relevanten Achse kontrolliert oder überwacht.

Somit erlaubt der erfindungsgemäße Industrieroboter ein hochdynamisches, hochgenaues und kostengünstiges System mit sicherer Positionserfassung.

Ein Ausführungsbeispiel der Erfindung ist exemplarisch in den beigefügten schematischen Zeichnungen dargestellt. Es zeigen:
- Fig. 1: einen Industrieroboter und
- Fig. 2: einen elektrischen Antrieb des Industrieroboters in blockschaltbildartiger Darstellung.

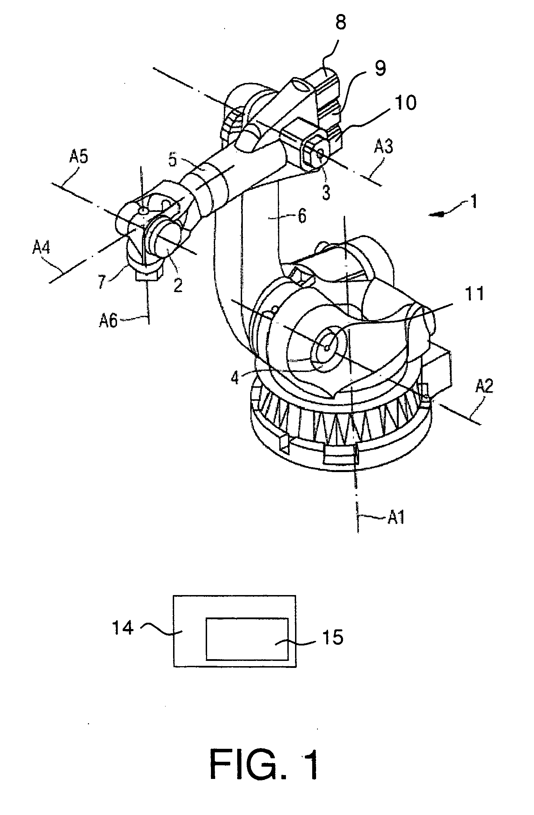

Die Fig. 1 zeigt einen Industrieroboters 1 mit einer Kinematik für Bewegungen in sechs Freiheitsgraden. Der Industrieroboter 1 weist in allgemein bekannter Weise Gelenke 2 bis 5, Hebel 6, sechs Bewegungsachsen A1 bis A6 und einen Flansch 7 auf.

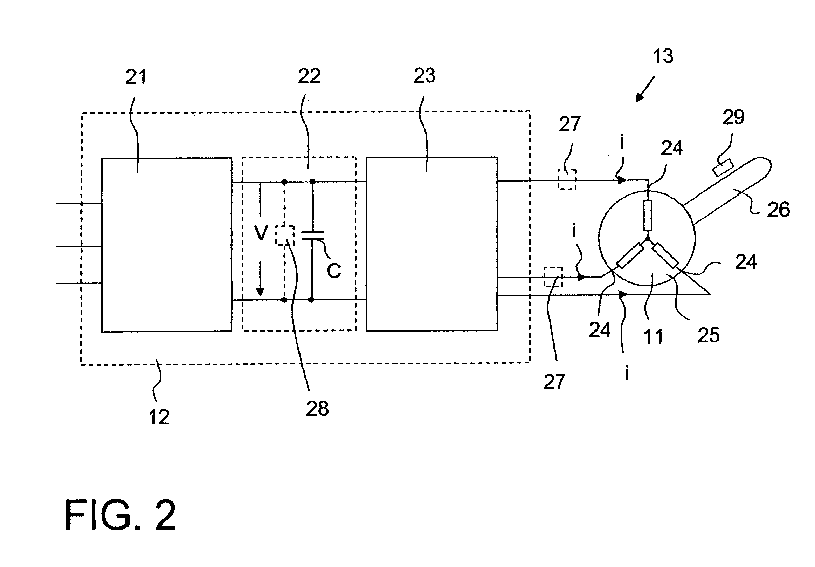

Jede der Achsen A1-A6 wird von einem Antrieb 13 bewegt, die im Falle des vorliegenden Ausführungsbeispiels elektrische Antriebe sind und jeweils einen Motor 8-11 aufweisen. Beispielsweise der Motor 11 bzw. der entsprechende elektrische Antrieb 13, der in der Fig. 2 dargestellt ist, bewegt die Achse A2 gegebenenfalls mittels nicht näher dargestellten, dem Fachmann jedoch allgemein bekannten Getriebe.

Im Falle des vorliegenden Ausführungsbeispiels handelt es sich bei den elektrischen Motoren 8-11 um Drehstrom-Synchronmotoren, insbesondere um permanent erregte Synchronmotoren. Die Motoren 8-11 werden jeweils von Leistungselektroniken 12, so genannten.Umrichtern, angesteuert, die im Falle des vorliegenden Ausführungsbeispiels in einer Steuerungsvorrichtung 14 angeordnet sind. Die Leistungselektroniken 12 sind jeweils mit ihren elektrischen Motoren 8-11 elektrisch verbunden. Eine der Leistungselektroniken 12 ist beispielhaft für den Motor 11 in der Fig. 2 blockschaltbildartig gezeigt. Somit umfasst der die Achse A2 bewegende elektrische Antrieb 13 den Motor 11 und die Leistungselektronik 12.

Der elektrische Antriebe 13 bzw. die Leistungselektronik 12 des elektrischen Motors 11 sowie die restlichen elektrischen Antriebe sind mit einem Steuerrechner 15 der Steuerungsvorrichtung 14 verbunden, auf dem ein geeignetes und dem Fachmann im Grundsatz bekanntes Rechenprogramm läuft, das die Leistungselektroniken 12 in geeigneter und allgemein bekannter Weise ansteuert, damit sich der Industrieroboters 1 wie gewollt bewegt. Der Steuerrechner 15 ist im Falle des vorliegenden Ausführungsbeispiels mit den Leistungselektroniken 12 im Gehäuse der Steuerungsvorrichtung 14 angeordnet.

Im Falle des vorliegenden Ausführungsbeispiels umfasst jede der Leistungselektroniken 12 für die elektrischen Motoren 8-11 einen Gleichrichter 21, einen Zwischenkreis 22 und einen Wechselrichter 23. Der Zwischenkreis 22 weist einen Kondensator C auf und der Gleichrichter 21 erzeugt aus der Dreiphasen-Netzspannung in allgemein bekannter Weise eine durch den Kondensator C des Zwischenkreises 22 geglättete Gleichspannung V. Die geglättete Gleichspannung V ist die Eingangsspannung des Wechselrichters 23, der aus der Gleichspannung V in allgemein bekannter Weise eine dreiphasige Spannung mit einstellbarer Frequenz ihrer Grundschwingung erzeugt. Die dreiphasige Spannung wird den Motorklemmen 24 des Motors 11 zugeführt und wird z.B. mittel Puls-Weiten-Modulation (PWM) erzeugt.

Es ist aber auch möglich, dass sich die Motoren 8-11 einen Gleichrichter und einen Zwischenkreis teilen und jedem der Motoren 8-11 jeweils ein mit dem einzigen Zwischenkreis verbundener Wechselrichter zugeordnet ist.

Der Wechselrichter 23 umfasst im Falle des vorliegenden Ausführungsbeispiels in allgemein bekannter Weise in den Figuren nicht näher dargestellte Halbbrücken, die jeweils drei Halbleiterschalter mit dazugehörigen Freilaufdioden aufweisen. Im Falle des vorliegenden Ausführungsbeispiels handelt es sich bei den Halbleiterschaltern um Leistungstransistoren, die z.B. IGBTs sind.

Der Motor 11 weist in allgemein bekannter Weise einen Stator 25 und einen Rotor 26 auf, dessen Drehzahl von der Frequenz der vom Wechselrichter 23 erzeugten Grundschwingung abhängt.

Im Falle des vorliegenden Ausführungsbeispiels sind der elektrische Antrieb 13 und die restlichen Antriebe Drehzahl geregelt, wobei hier die dem Fachmann geläufige feldorientierte Regelung zur Anwendung kommt. Für die Regelung notwendige Signale, wie z.B. die elektrischen Ströme i und die elektrischen Spannungen des Motors 11 werden über geeignete Messvorrichtungen gemessen und dem Steuerrechner 15 zugeführt, auf dem das zur Regelung der Antriebe 13 vorgesehene Rechenprogramm läuft.

Im Falle des vorliegenden Ausführungsbeispiels werden nur zwei der drei elektrischen Ströme i des Motors 11 mittels Strommessvorrichtungen 27 ermittelt. Der dritte Strom i des Motors 11 ermittelt der Steuerrechner 15 in allgemein bekannter Weise aus den beiden restlichen Strömen i. Die Dreiphasen-Spannung des Motors 11 ermittelt der Steuerrechner 15 aus der Gleichspannung V des Zwischenkreises 22 und den Schaltstellungen der Halbleiterschalter des Wechselrichters 23, wie es prinzipiell dem Fachmann geläufig ist. Die Gleichspannung V des Zwischenkreises 22 wird mittels eines Spannungs-Sensors 28 gemessen, der mit dem Steuerrechner 15 in nicht dargestellter Weise verbunden ist.

Im Falle des vorliegenden Ausführungsbeispiels umfasst der Industrieroboter 1 für jede seiner Achsen A1-A6 einen Drehgeber, von denen der Drehgeber 29 der Achse A2 in der Fig. 2 gezeigt ist. Der Drehgeber 29, bei dem es sich z.B. um einen Sin/Cos Geber oder um einen Inkrementalgeber handelt, ist mit dem Steuerrechner 15 in nicht dargestellter Weise verbunden, so dass dieser von den Drehgebern stammende Signale auswerten kann. Die vom Drehgeber 29 stammende Signale sind ein Maß für die Position des Rotors 26 des der Achse A2 zugeordneten Motors 11 und somit ein Maß für die Position, insbesondere die Winkelposition bzw. Winkelstellung der Achse A2.

Somit steht im Falle des vorliegenden Ausführungsbeispiels dem Steuerrechner 15 eine Information über die Winkelposition des Rotors 26 und der Achse A2, sowie der restlichen Achsen A1, A3-A6 zu Verfügung. Die aufgrund der mit dem Drehgeber 29 ermittelten Winkelposition der Achse A2 bzw. des Rotors 26 des Motors 11 wird für die Regelung des elektrischen Antriebs 13 verwendet.

Die Information über die Positionen der Achsen A1-A6 aufgrund der von den entsprechenden Drehgebern 29 stammenden Signalen wertet im Falle des vorliegenden Ausführungsbeispiels der Steuerrechner 15 aus, um gegebenenfalls eine Notsituation zu erkennen und gegebenenfalls die Antriebe 13 derart anzusteuern, so dass eine aktuelle Bewegung des Industrieroboters 1 gebremst wird.

Für eine sichere Überwachung der Positionen der Achsen A1-A6 werden im Falle des vorliegenden Ausführungsbeispiels diese zusätzlich mittels eines zweiten Verfahrens überwacht bzw. ermittelt. Dazu wertet der Steuerrechner 15 die den elektrischen Strömen i der Motoren 8-11 sowie den Gleichspannungen V der Zwischenkreise 22 zugeordneten Signale aus, um auf die Winkelstellungen der Rotoren 26 der relevanten Motoren 8-11 zu schließen. Algorithmen, mittels derer die Winkelpositionen von Rotoren von Synchronmotoren aufgrund der gemessenen elektrischen Ströme und/oder Spannungen geschlossen werden kann, sind dem Fachmann im Prinzip z.B. aus den in der Einleitung genannten Druckschriften EP 1 051 801 B1, DE 102 26 974 A1, DE 10 2006 004 034 A1, EP 0 539 401 B1, DE 10 2007 003 874 A1 oder EP 0 579 694 B1 bekannt und werden daher nicht weiter erläutert.

Im Falle des vorliegenden Ausführungsbeispiels ist der Steuerrechner 15 derart eingerichtet, so dass er eine Notbremsung des Industrieroboters 1 einleitet, wenn sich die ermittelten Positionen wenigstens einer seiner Achsen A1-A6 um wenigstens einen vorgegebenen Wert unterscheiden.

## Patentansprüche

1. Industrieroboter, aufweisend einen Roboterarm mit mehreren Achsen (A1-A6), wenigstens einen elektrischen Antrieb (13), der einen Drehstrom-Synchronmotor (8-11) aufweist und eingerichtet ist, eine der Achsen (A1- A6) zu bewegen, und eine Positionserfassungsvorrichtung (29), die eingerichtet ist, die Position der dem Synchronmotor (11) zugeordneten Achse (A2) zu ermitteln, wobei der Industrieroboter (1) eingerichtet ist, mittels erster Signale, die elektrischen Strömen (i) und/oder elektrischen Spannungen (V) des Synchronmotors (11) zugeordnet sind, die Position der dem Synchronmotor (11) zugeordneten Achse (A2) zu ermitteln.

2. Industrieroboter nach Anspruch 1, bei dem die Position der relevanten Achse (A2) eine Winkelstellung ist und/oder über die Position, insbesondere die Winkelstellung des Rotors (26) des Synchronmotors (11) ermittelt wird.

3. Industrieroboter nach Anspruch 1 oder 2, wobei die ersten Signale den dreiphasigen elektrischen Spannungen und/oder den dreiphasigen elektrischen Strömen (i) und/oder einer elektrischen Spannung (V) eines Zwischenkreises (22) eines dem Synchronmotor (11) vor geschalteten Umrichters (12) zugeordnet sind.

4. Industrieroboter nach einem der Ansprüche 1 bis 3, bei dem die mittels der ersten Signale ermittelte Position der relevanten Achse (A2) in elektrischen Winklegraden des Rotors (26) des Synchronmotors (11) ausgedrückt sind.

5. Industrieroboter nach einem der Ansprüche 1 bis 4, aufweisend eine Steuerungsvorrichtung (14, 15), die eingerichtet ist, den Antrieb (13) für das Bewegen ihrer Achse (A1-A6) anzusteuern, und die eingerichtet ist, die mittels der ersten Signale und die mittels der Positionserfassungsvorrichtung (29) ermittelten Positionen auszuwerten und das Bewegen der relevanten Achse (A1-A6) oder aller Achsen (A1-A6) in dem Fall zu stoppen, wenn sich die beiden ermittelten Positionen um einen vorbestimmten Wert unterscheiden.

6. Industrieroboter nach einem der Ansprüche 1 bis 5, der eingerichtet ist, für das Bewegen der dem Synchronmotor (8-11) zugeordneten Achse (A1-A6) den Antrieb (13) aufgrund von von der Positionserfassungsvorrichtung (29) stammenden zweiten Signalen zu regeln.

7. Industrieroboter nach einem der Ansprüche 1 bis 6, bei dem die Positionserfassungsvorrichtung ein Drehgeber (29), insbesondere ein Sin/Cos Gegeber oder ein Inkrementalgeber ist.

8. Verfahren zum Betreiben eines Industrieroboters, aufweisend folgende Verfahrensschritte:
- Ermitteln der Position einer Achse (A2) eines mehrere Achsen (A1-A6) aufweisenden Industrieroboters (1) mittels einer Positionserfassungsvorrichtung (29) und
- Ermitteln der Position der Achse (A2) mittels erster Signale, die elektrischen Strömen (i) und/oder elektrischen Spannungen (V) eines die Achse (A2) bewegenden Drehstrom-Synchronmotors (11) zugeordnet sind,

9. Verfahren nach Anspruch 8, bei dem die ersten Signale zusätzlich generierten, nicht zum Bewegen des Drehstrom-Synchronmotors (11) dienenden elektrischen Strömen und/oder elektrischen Spannungen zugeordnet sind.

10. Verfahren nach Anspruch 8 oder 9, zusätzlich aufweisend Auswerten der mittels der Positionserfassungsvorrichtung (29) ermittelten Position und der mittels der ersten Signale ermittelten Position und Stoppen einer Bewegung der Achse (A1) oder der Achsen (A1-A6), wenn sich die beiden ermittelten Positionen um ein vorbestimmtes Maß unterscheiden.

11. Verfahren nach einem der Ansprüche 8 bis 10, zusätzlich aufweisend Regeln des Synchronmotors (11) aufgrund von von der Positionserfassungsvorrichtung (29) stammenden zweiten Signalen für ein Bewegen der dem Synchronmotor (11) zugeordneten Achse (A2).
